# EUROPEAN PATENT APPLICATION

(11) **EP 4 703 940 A1**
(43) Date of publication of application: **04.03.2026**
(21) Application number: 25190414.0
(22) Date of filing: 18.07.2025
(51) Int. Cl.: G06F 21/60, H04L 9/40, G06F 21/62

(54) **DETECTING COVERT CHANNELS IN ROLE BASED CLOUD ACCESS CONTROL POLICIES USING LARGE LANGUAGE MODEL (LLM)**

(30) Priority: 29.08.2024 IN 202421065208
(71) Applicant: Tata Consultancy Services Limited, Maharashtra (IN)
(72) Inventor: JOSHI, Vaibhavi Vivek, 411057 Pune, Maharashtra (IN); KARMARKAR, Hrishikesh Sawalaram, 400021 Mumbai, Maharashtra (IN); RAMANATHAN, Venkatesh, 411057 Pune, Maharashtra (IN)
(74) Representative: Goddar, Heinz J.

(57) **Abstract**

Literature on access control policies in cloud computing has focused on the design of secure models of access or on the syntactic and semantic analysis of policies but not into aspect of covert channel. A method and system for detecting covert channels in role based cloud access control policies using Large Language Model (LLM) is disclosed. A set of access control policies and an access specification is analyzed by the LLM for presence of violation indicating an implicit path between an entity (principal) and a restricted resource. Further, the LLM is prompted to generate a script Python program, which in turn generates a graph to visually depict paths leading from principal to one or more resources in the cloud environment, wherein any implicit access to the restricted resource if detected is highlighted by introducing a path from the principal to the restricted resources with label as covert channel. The covert channel so depicted provides information on possible theft threats.

## Description

### CROSS-REFERENCE TO RELATED APPLICATIONS AND PRIORITY

The present application claims priority from Indian patent application no. 202421065208, filed on 29 August 2024.

### TECHNICAL FIELD

The embodiments herein generally relate to the field of cloud access rights control and, more particularly, to a method and system for detecting covert channels in role based cloud access control policies using Large Language Models (LLMs).

### BACKGROUND

In the realm of cloud computing, the task of configuring access control policies is a critical aspect of ensuring security of cloud resources. However, policy configuration remains a complex task with a high cognitive load as it requires a simultaneous understanding of the cloud environment and security requirements of the organization. This often creates gaps between intended and actual policy configuration leading to misconfigurations of policies. A misconfigured policy can introduce subtle and unexpected access control (AC) vulnerabilities that can be exploited by malicious entities to gain unauthorized access to cloud resources.

Conventionally, access control policies are manually formulated based on business rules or business intent received via an access specification. However, with manual efforts involved right interpretation and right conversion of intent of the access specification into the access control policies set for the cloud environment always remains a challenge. Typically, with role based access of resources, the complexity of access control policy formulation increases, leading to loop holes. Thus, implicit access violation paths may be inadvertently introduced, that go undetected. This leads to generation of a direct channel for undesired access of a restricted resource, introducing access violation or theft.

Furthermore, certain scenarios may demand allowing users or clients to self-configure the access control policies. However, misconfigured access control policy backfires leading to breach. Analyzing the configured access control policies in time efficient and accurate manner would help strengthen the policy formulation.

### SUMMARY

Embodiments of the present disclosure present technological improvements as solutions to one or more of the above-mentioned technical problems recognized by the inventors in conventional systems.

For example, in one embodiment, a method for violation detection in access control policies using Large Language Models (LLMs) is provided. The method includes receiving a set of access control policies, formulated in accordance with an access specification specified in natural language for a cloud environment, wherein the set of access control policies specify i) one or more resources among a plurality of resources that are individually accessible to a principal among a plurality of principals, and ii) each role among a plurality of roles the principal is allowed to assume role in the could environment.

Further the method includes determining via the Large Language Model (LLM) executed by the one or more hardware processors, presence of at least one violation of the access specification by the set of access control policies, wherein the LLM is prompted via a first prompt comprising a set of directives instructing to process the set of access control policies, and the access specification for determining the at least one violation.

Furthermore the method includes generating via the LLM executed by the one or more hardware processors, a script for creating an access violation graph on determining presence of at least one access violation, wherein the LLM is prompted using a second prompt.

Further the method includes generating by executing the script the access violation graph, comprising nodes representing one or more principals, one or more roles and one or more resources connected with edges describing access rights and allowed role assumption, wherein presence of implicit access to a restricted resource through assumption of one or more role by the principal is depicted by generating a highlighted edge as a covert channel between the principal and the restricted resource.

In another aspect, a system for violation detection in access control policies using Large Language Models (LLMs) is provided. The system comprises a memory storing instructions; one or more Input/Output (I/O) interfaces; and one or more hardware processors coupled to the memory via the one or more I/O interfaces, wherein the one or more hardware processors are configured by the instructions to receive a set of access control policies, formulated in accordance with an access specification specified in natural language for a cloud environment, wherein the set of access control policies specify i) one or more resources among a plurality of resources that are individually accessible to a principal among a plurality of principals, and ii) each role among a plurality of roles the principal is allowed to assume role in the could environment.

Further the system is configured to determine via the Large Language Model (LLM) executed by the one or more hardware processors, presence of at least one violation of the access specification by the set of access control policies, wherein the LLM is prompted via a first prompt comprising a set of directives instructing to process the set of access control policies, and the access specification for determining the at least one violation.

Furthermore the system is configured to generating via the LLM executed by the one or more hardware processors, a script for creating an access violation graph on determining presence of at least one access violation, wherein the LLM is prompted using a second prompt.

Further the system is configured to generate by executing the script the access violation graph, comprising nodes representing one or more principals, one or more roles and one or more resources connected with edges describing access rights and allowed role assumption, wherein presence of implicit access to a restricted resource through assumption of one or more role by the principal is depicted by generating a highlighted edge as a covert channel between the principal and the restricted resource.

In yet another aspect, there are provided one or more non-transitory machine-readable information storage mediums comprising one or more instructions, which when executed by one or more hardware processors causes a method violation detection in access control policies using Large Language Models (LLMs).

The method includes receiving a set of access control policies, formulated in accordance with an access specification specified in natural language for a cloud environment, wherein the set of access control policies specify i) one or more resources among a plurality of resources that are individually accessible to a principal among a plurality of principals, and ii) each role among a plurality of roles the principal is allowed to assume role in the could environment.

Further the method includes determining via the Large Language Model (LLM) executed by the one or more hardware processors, presence of at least one violation of the access specification by the set of access control policies, wherein the LLM is prompted via a first prompt comprising a set of directives instructing to process the set of access control policies, and the access specification for determining the at least one violation.

Furthermore the method includes generating via the LLM executed by the one or more hardware processors, a script for creating an access violation graph on determining presence of at least one access violation, wherein the LLM is prompted using a second prompt.

Further the method includes generating by executing the script the access violation graph, comprising nodes representing one or more principals, one or more roles and one or more resources connected with edges describing access rights and allowed role assumption, wherein presence of implicit access to a restricted resource through assumption of one or more role by the principal is depicted by generating a highlighted edge as a covert channel between the principal and the restricted resource.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system, for detecting covert channels in role based cloud access control policies using Large Language Model (LLM), in accordance with some embodiments of the present disclosure.
FIG. 1B represents access control policies as a directed graph, where an original protection graph as derived from the access control policies is modified to an access violation graph on detection a covert channel indicating implicit access violation of a restricted resource of a cloud environment, in accordance with some embodiments of the present disclosure.
FIG. 1C illustrates an architectural overview of the system of FIG. 1A, in accordance with some embodiments of the present disclosure.
FIG. 2 is a flow diagram illustrating a method for detecting covert channels in role based cloud access control policies using the LLM, using the system depicted in FIG. 1A and 1B, in accordance with some embodiments of the present disclosure.
FIG. 3 depicts an access violation graph generated by the system of FIG. 1B, in accordance with some embodiments of the present disclosure.
FIG. 4 depicts a potential access violation graph generated by the system of FIG. 1B, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The notion of covert channels has been extensively studied in the context of information flow security, in computer networks and operating systems, wherein covert channel refers to a communication channel that allows entities to transfer information in a way that violates the system's security policy. However, in the context of cloud access control policies, especially those that use role based access control, covert channels have not been studied in detail. Literature on access control policies in cloud computing has focused on the design of secure models of access or on the syntactic and semantic analysis of policies.

Embodiments of the present disclosure provide a method and system for detecting covert channels in role based cloud access control policies using Large Language Model (LLM). A covert channel herein refers to channel that can be exploited to gain access to a resource that was intended to be protected by the access specification, resulting in a theft of the resource in a cloud environment The system, also referred to as Covert Hunter, sources a set of access control policies and an access specification as input and constructs a prompt that incorporates the policies and the specification in accordance with a set of directions to the LLM. If the LLM outputs that the access specification is violated by the access control policies, this indicates presence of an implicit path or channel to an entity (principal) to access a restricted resource. Further, to explicitly display the presence of incurred violation, the LLM is prompted to generate a script Python program, which in turn generates a graph in .dot format visually depicting paths leading from principal to one or more resources in the cloud environment, wherein any implicit access to the restricted resource if detected is highlighted by introducing a path form the principal to the restricted resources with label as covert channel. The covert channel so depicted provides information on possible theft threats.

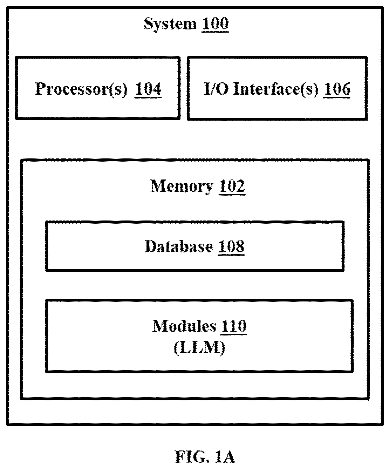

Referring now to the drawings, and more particularly to FIGS. 1A through 4, where similar reference characters denote corresponding features consistently throughout the figures, there are shown preferred embodiments, and these embodiments are described in the context of the following exemplary system and/or method.

FIG. 1A is a functional block diagram of a system 100, for detecting covert channels in role based cloud access control policies using Large Language Model (LLM), in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface for enabling user interaction with the system 100 and the like. The I/O interface 106 can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110 such as the LLM, for example GPT-4 or the like. The plurality of modules 110 include programs or coded instructions that supplement applications or functions performed by the system 100 for executing different steps involved in the process of detecting covert channels in role based cloud access control policies using the LLM, being performed by the system 100 for the cloud environment of interest. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system100 and methods of the present disclosure.

Further, the memory 102 includes a database 108. The database (or repository) 108 may include a plurality of abstracted pieces of code for refinement and data that is processed, received, or generated as a result of the execution of the plurality of modules in the module(s) 110.

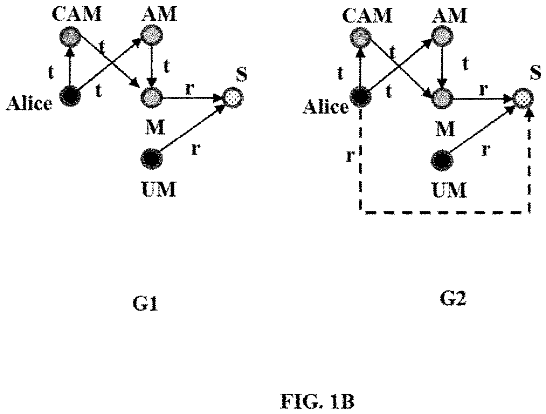

Although the database 108 is shown internal to the system 100, it will be noted that, in alternate embodiments, the database 108 can also be implemented external to the system 100, and communicatively coupled to the system 100. The data contained within such external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in flow diagrams in FIG. 1B through FIG. 4.

FIG. 1B explains the problem statement with access control policies as a directed graph, where an original protection graph as derived from the access control policies is modified to an access violation graph on detection a covert channel indicating implicit access violation of the restricted resource, in accordance with some embodiments of the present disclosure.

Example Scenario: BeanBags Srl is a leading supplier of high-end bean bags to luxury hotels and hosts its operations on the cloud. The company has a set of cloud resources, which are accessed by different roles like manager, assistant manager, contract assistant manager, with the accesses enforced via a set of role based access control policies.

The company has a set of predefined rules also referred to as access specification which says that:
*" No temporary employee can ever get access to the company secrets database and the secrets database can only be accessed by a manager or someone with the manager role."*

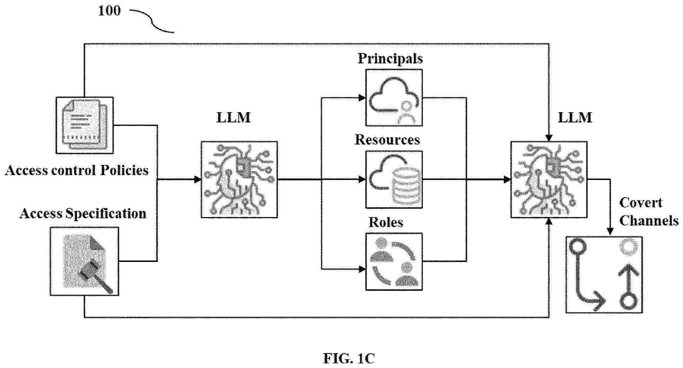

Alice, a temporary employee joins BeanBags Srl and gets the default cloud access rights allotted to the fresh pool of joinees and over time eventually assumes the role of a contract assistant manager. When her manager Bob goes on leave, she takes on the responsibilities of a manager by assuming the corresponding Manager role and all the rights associated with it. One of these rights also include access to the secrets database in a clear violation of the company's security policy. This was caused by a policy misconfiguration that caused it to deviate from the expected or intended policy configuration that respects the access specification. The misconfiguration involved initial access to Alice as a temporary employee and privilege escalation to the manager role through intermediate roles like the contract assistant manager. This is shown in FIG. 1C as a pair of directed graphs. **In** these graphs, the node labeled Alice is a cloud user who is a temporary employee, while the node UM is a cloud user who is a permanent manager. The nodes with labels CAM, AM and M represent the roles for Contract Assistant Manager, Assistant Manager and Manager, respectively. Additionally, the node S represents the secrets database. **In** these graphs, a directed edge labeled t from node u to v represents the right of u to assume the role v, while a directed edge labeled r from node 'u' to 'v' represents the right of u to access the resource v.

The graph G1 represents the state or a snapshot of allowed access rights at a given point in time. In G1, there is no edge labeled r from Alice to S, seemingly denying her the access. However, there exists a directed path from Alice to S. Furthermore, a reflexive and transitive closure of G1 does contain a direct edge from Alice to S, shown in dotted line in the graph G2. Note that there are other edges in the closure that are not shown in G2 for clarity. This dotted line represents an implicit access right of Alice to the secrets database in G1 itself. An edge of this kind that is not present in a protection graph but is contained in its reflexive and transitive closure is herein identified or defined as the covert channel by the system 100. A covert channel can be exploited to gain access to a resource that was intended to be protected by the access specification, resulting in a theft of the resource.

It is critical to analyze such implicit violations that are present and alert the end user about the same. Many cloud service providers bundle tools to analyze access control policies and provide recommendations or warnings on the state of access rights. However, these tools do not provide a way to detect covert channels or theft in access control policies. The main reason for this is that the intent behind the policy configuration is often described in natural language and is external to the policy itself. Even if the intent or access specification can be extracted from business documents or high-level organizational security policies, it still would require a formal methods expert to formulate the access specification in a formal notation. Thus, the detection of vulnerabilities like covert channels and theft due to misconfigured access control policies remains an onerous task that has no easy technical solution.

FIG. 1C illustrates an architectural overview of the system of FIG. 1A to address the technical challenges of covert channel detection as explained in FIG. 1B. The system 100 utilizes Large Language Models (LLMs) to automatically detect covert channels and theft in access control policies. The system provides a graph-based formalization of the notion of covert channels and theft due to misconfigured access control policies. The system, in an example implementation also referred to as CovertHunter, can automatically detect such vulnerabilities and depict as a graph as in FIG. 1C G2. The system 100 uses the LLM to understand policy intent from the access specification described in natural language as is often done in business documents or high level organizational security policies. The access specification is matched or compared by the LLM against the actual cloud access control policies to detect covert channels and theft.

The system 100 considers a formal model of access control in a cloud framework or the cloud environment that has the following elements.
1. Principals: A principal is an entity that can access cloud resources. A principal can be a cloud account, user or application that is authorized to make requests, access resources, and perform actions within the cloud environment.
2. Roles: Roles are utilized to allocate permissions to various cloud entities. Cloud services, applications, or individual users can assume these roles to gain temporary access to particular resources or services. Using roles, organizations can apply the principle of least privilege, guaranteeing that each entity possesses only the permissions essential for performing its duties, thus reducing any potential security threats.
3. Resources: A resource is an entity that is accessed by a principal or role. Examples of cloud resources are cloud services, databases, files, AI models, etc.
4. Access Control Policy: An access control policy is a set of rules that define the access rights of principals or roles to resources. The policy can describe a set of conditions under which a principal can access a resource or assume a role.

In the cloud environment, the state of access rights endowed to principals and roles at a given point in time can be called the protection state. A policy or a set of policies can be thought of as an abstraction of a protection state and can be further abstracted and represented as a graph following the notion of Snyder's protection graph known in the art, where G = (V, E, λ). Thus, a protection graph captures the protection state. In the protection graph, G is a set of nodes that represents either a principal, resource or a role, E ⊆ V × V is the set of directed edges labeled t or r by the labeling function λ : E →{r, t}. A directed edge labeled t from u to v exists if and only if u is a principal or role and v is a role and u is allowed to assume the role v by the policy. Similarly, a directed edge labeled r from u to v is present if only if u is a principal or role and v is a resource, and the policy allows u to access v. For our protection graph model, we note that when a principal assumes a role, it relinquishes all its earlier rights. Thus, a directed edge from role u to role v, means that there is a principal that had assumed the role u and can now assume the role v by relinquishing the rights associated with u. Thus, the graph G1 in FIG. 1B is a protection graph for the BeanBags scenario.

The problem statement to be solved by the LLMs is clearly defined and formalized below with definitions. Under specific conditions of rights and roles, edges in the protection graphs can be transitively composed to imply new rights. This is captured by the notion of take transitivity in the protection graph and defined formally in Definition 1.
- Definition 1 (Take transitivity): If node u has an edge labeled t to v and if node v has an edge to w labeled x ∈{t, r} then u has an edge labeled x to w.

This definition ensures that if a principal can assume a role, then it can also access the resources that the role can access, and this access can be chained on the roles. Given a protection graph G, let G* denote the reflexive and take transitive closure of G. The graph G* is also the protection graph. The reflexive and take transitive closure of a protection graph makes explicit all the implicit access rights due to take transitivity.
- Definition 2 (Derived protection graphs): Given a protection graph G0, we say that G0 →* G1 if G1 is the protection graph that results from G0 by either adding or deleting zero or more edges (with labels in {t, r}) to/from G0 followed by taking the reflexive and take transitive closure. We then say that G1 derives from G0.

The above definition 1 and definition 2 is used by the system 100 to define the notion of theft via covert channels in access control policies
- Theft: Given a protection graph a channel of rights is a directed edge in the graph starting at a node that is not a resource and ending at a role or resource node. One can define a malicious channel of rights as a channel that introduces unintended access rights in the protection graph. Such a channel is defined as the covert channel of rights and is defined below.
- Definition 3 (Covert channel of rights): A channel of rights π = (rᵢ, x) from node rᵢ to node x is a covert channel of rights in a protection graph G0 if there is a sequence of (derived) protection graphs G0 →* G1 →* ... →* Gn such that π is in Gn but not in any Gi for i ∈{0,...,n - 1}, and it allows ri to access resource x in Gn.

In FIG. 1B, the dotted line from Alice to the secrets database is a covert channel of rights in G1 that allows Alice to access the secrets database. The notion of covert channels has been extensively studied in the context of information flow security, in computer networks and operating systems. However, in the context of cloud access control policies, especially those that use role based access control, covert channels have not been studied in detail. Literature on access control policies in cloud computing has focused on the design of secure models of access or on the syntactic and semantic analysis of policies.

The covert channel can be exploited by a principal to gain access to a resource that is otherwise not allowed by the intended access rules of an organization, resulting in a theft of the resource. The theft is formally defined here in the context of a protection graph. The notion of an access specification is redefined here. An access specification is a set of principal-resource and principal role pairs that describe valid accesses in the protection graph. Access specifications typically come from different sources like business documents, organizational security policies, etc. and provide the security intent that an access control policy must encode. For example in the BeanBags scenario, the access specification would exclude the pair (TemporaryEmployee,SecretsDatabase) and include the pair (Manager, SecretsDatabase). This allows us to present the following formal definition of theft in the context of a protection graph.
- Definition 4 (Theft): Given a protection graph G0, if rᵢ gets access to a resource x via a covert channel of rights when (rᵢ, x) is not in the access specification then ri commits a theft of x.

In the BeanBags scenario of FIG. 1B the access of the secrets database by Alice is construed as theft since it involves the covert channel of rights (dotted line), and the pair (Alice,SecretsDatabase) is not in the access specification. It can be noted that a policy analysis that does not consider concept of covert channels is unable to conclude the existence of theft as the access specification would be consistent with policy that has not explicitly granted Alice access to the secrets database.
- Theft detection: Given a protection graph G0 and an access specification A, the problem of theft detection is to determine if there exists a covert channel of rights in *G*₀ that allows a principal to access a resource that is not in A. The key challenge here is to be able to detect covert channels and theft in the graph *G*₀ using the access specification

The system architecture as depicted in FIG. 1C can automatically detect covert channels and theft in access control policies. The LLM, based on the given inputs (as prompts) is able to understand the concept that chaining of role assumption can lead to violation of access specification.

The system takes as input the set of access control policies and an access specification and constructs a prompt that incorporates these. The prompt includes directions to the LLM to detect if the access specification is violated by the access control policies. If the specification can be violated then the LLM is asked to generate a Python program, which in turn generates a graph, for example using .dot format showing the sequence of accesses that lead to a covert channel and theft.

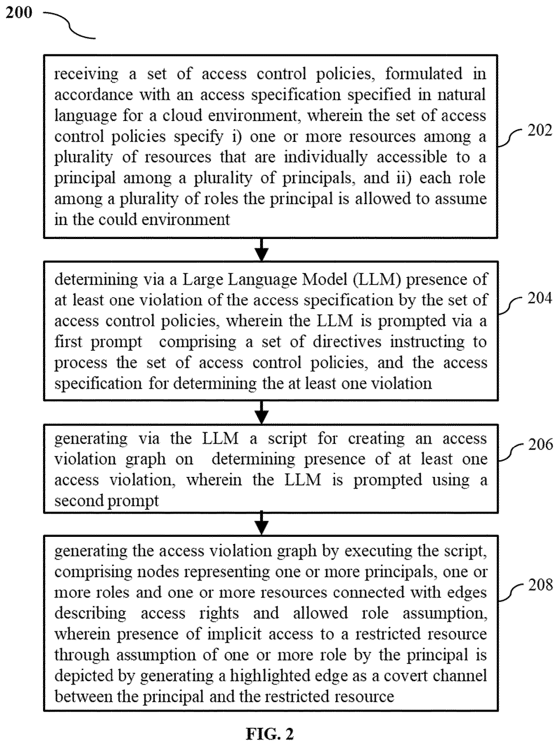

FIG. 2 is a flow diagram illustrating a method 200 for detecting covert channels in role based cloud access control policies using the LLM, using the system depicted in FIG. 1A and 1B, in accordance with some embodiments of the present disclosure. In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A and 1C and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

Referring to the steps of the method 200, at step 202 of the method 200, the one or more hardware processors 104 are configured by the instructions to receive a set of access control policies, formulated in accordance with an access specification specified in natural language for a cloud environment. For the experimental evaluation, the GPT-4 is used to generate a small set of sample AWS policies for the AWS^{™} cloud computing platform by feeding basic information from the internet about real-world security violations and data breaches on cloud platforms. These sample policies were then applied to configure principals, users, and roles within AWS cloud environments and validated using AWS Access Analyzer. The set of access control policies specify i) one or more resources among a plurality of resources that are individually accessible to a principal, and ii) each role among a plurality of roles the principal is allowed to assume role in the could environment.

As already described, an important rule in the example BeanBags scenario intends that '*Temporary employees should not have access to the secrets database and only a Manager has access to the secrets database.* ' A sample set of AWS IAM access control policies for the BeanBags scenario is stated below, in which the '*Temporary Employee Role policy, applied to the user Alice does not explicitly allow or deny access to the secrets database.* ' ' *The Manager role policy is highly permissive and allows access to the secrets database, while the Assistant Manager (Permanent and Contract) Role policy allows anyone in the role to assume the Manager role. '*

### Listing 1: Temporary employ Policy

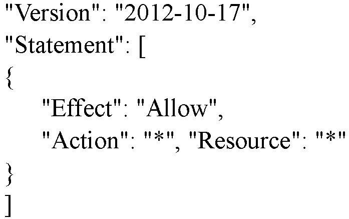

### Listing 2: Assistant Manager (Permanent and Contract) Role Policy

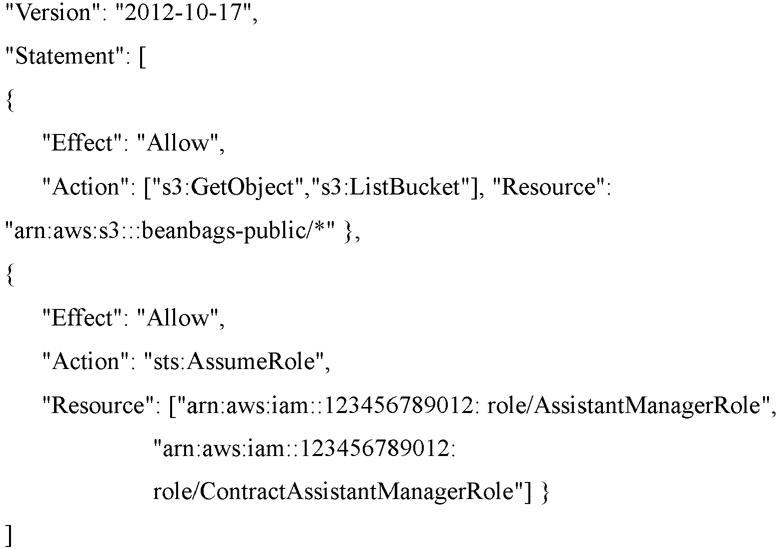

### Listing 3: Manager Role Policy

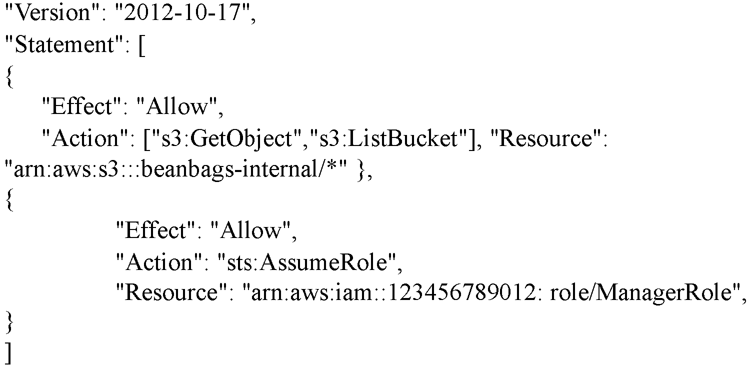

At step 204 of the method 200, the one or more hardware processors 104 are configured by the instructions to prompt the LLM with a first prompt to determine presence of at least one violation of the access specification by the set of access control policies. The first prompt comprises the set of access control policies, the access specification, and a set of directives to the LLM for detecting if the access specification is violated by the access control policies. The LLM, based on the given inputs (as prompts) is able to understand the concept that chaining of role assumption can lead to violation of access specification.

The prompt format comprises:
i. role field defining role of LLM in current conversation,
ii. template mentioning the role in a single line,
iii. prompt initialization field mentioning a task in a single line,
iv. inputs filed mentioning the inputs to be received by the LLM.
v. directives field providing instructions to the LLM to perform the task.
vi. output field mentioning an expected output format and path where the output needs to be generated, and
vii. printing instructions field: About not printing additional things and not to hallucinate.
**The sequence of prompts or set of Directives given to LLM are mentioned below**
**Role:** System
**Template:** Assistant is a large language model trained by OpenAI, which has detailed knowledge of AWS Identity and Access management system and is expert python developer. Assistant is smart and can detect theft of secret information through 'covert channels' created due to incorrect IAM policies and assume roles.
**Prompt1** = "I am going to provide you a AWS scenario below, followed by policies in JSON format and then instruction to be performed on the given prompts. Please wait till end of all the prompts. Do not print anything till I provide the instructions. Do not print additional text."
**Prompt2** = "I am going to provide you the scenario below. Please wait for next prompt, do not print anything else. Scenario is - {scenario_text}"
**Variable Name**
   = Scenario_text -> which contains the given scenario in natural language along with access specifications in JSON format.
**Prompt3=** "Consider the above scenario, check if this company policy can be violated. Print the response as 'Yes' or 'No' in single quotes. Do not print any addional text. Do not print anything else."

At step 206 of the method 200, the one or more hardware processors 104 are configured by the instructions to prompt the LLM with a second prompt, on determination of presence of the at least one violation, to generate a script for creating an access violation graph.
**LLM second Prompt to generate the graph when covert channel (violation) is detected** -
**Prompt -4** =
   *Instruction -> For each principal defined in the AWS policies given above, Check if this company policy can be violated. If it can be violated explain how it can be violated. Describe the access policies as a simple and detailed graph with nodes for each principal, role and resource and edges connecting the violation path. The components should be aligned properly, and every element should be properly named. Use the example individual names given in scenario. Show potential violation paths due to future role assumption as dotted edges. Verify the graph for access violation. Add an **'bold edge'** from the initial source node to the final destination nodes of a violating path and label it "covert channel". The "covert channel" **bold edge** should start from role node to restricted end resource node. Avoid duplicate edges. Generated graphs should be easy to understand. Generate a python program to generate a dot, pdf and png files for the graph. Save these files in the below folder in windows with appropriate names. Folder name* = *"{output_path}". Import all the required libraries. Import datetime library in the script. Output file name should be appended with date and time in ddMonYY_HHMMSSformat. Write the code enclosed in <code><*/*code> format. Print exception message if the script execution fails. Open the generated PNG image as soon as execution is completed.*
   *If the role assumption needs to be ordered in time then mark the edges with integers from 1 onwards where a lower number means that the role is to be assumed earlier in time. roles that can be assumed at the same time to get the violation should be marked with the same number. So do not print anything else, only print the python code enclosed in <code><*/*code> format.*
   **Variables** - output_path -> Contains the path in local system where the output files needs to be stored. This path is created at run time which includes the current date and time in folder name.
   **Prompt5** = "From the given chunk of information, extract and return only the python code in text format. If there is no python code, print only ‴python. Do not write anything else. Strictly remove all lines with the <code></code> from the output text. Verify the python syntax and do corrections if required. Only return python code as a script format. Do NOT print anything else."

At step 208 of the method 200, the one or more hardware processors 104 are configured by the instructions to generate by executing the script, the access violation graph. The access violation graph is a directed graph that includes nodes representing one or more principals, one or more roles and one or more resources connected with edges describing access rights and allowed role assumption. The presence of implicit access to the restricted resource through assumption of one or more role by the principal is depicted by generating a highlighted edge as a covert channel between the principal and the restricted resource.

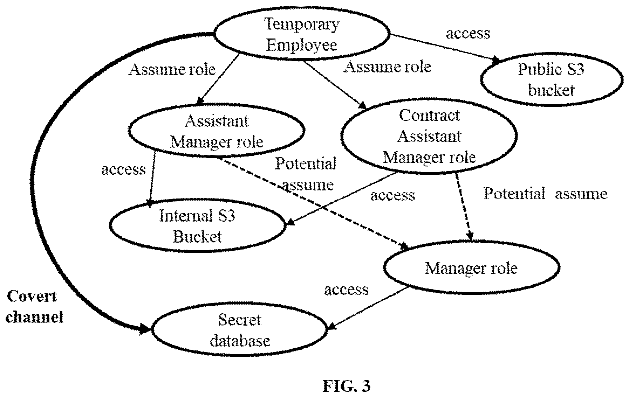

The response of the LLM is a graph description language, which is converted to a graph to provide user readable visual format. In the example implementation of the BeanBags scenario, the response of the LLM to the second prompt is a Python program that generates a DOT encoding for the graph and compiles it to a PDF and PNG. The access violation graph generated is depicted in FIG. 3 The graph contains nodes for the principals, roles and resources with edges describing access rights. The dotted edges show paths of privilege escalation executed through assumption of roles. This, in turn embodies the covert channel leading to a violation of the company policy of not allowing temporary employees to access the secrets database. The graph also contains a new edge from Temporary Employee (Alice) to the Secrets Database labeled covert channel that represents the covert channel of rights that allows Alice to access the secrets database.

The method 200 can further using trained LLM can generate change recommendations via the LLM for the received set of access policies to eliminate the covert channel.

Further, the LLM can anticipate presence of covert channel for possible assumption of role by the principal if the covert channel is not present in received access control policies for current role assumption.

However, a robust security analysis of policies should also be able to anticipate changes to existing policies, which do not have covert channels that can result in the creation of covert channels and hence theft. To demonstrate the ability of the system predict the effect of anticipated policy changes the following scenario is considered where the AWS IAM policies for Assistant Manager (Permanent and Contract) Roles do not contain an action allowing them to assume the Manager Role.

When the modified policy (without covert channels), as in listing 4 below, is received by the system 100, then while retaining the rest of the prompt described earlier, the system 100 is able to predict changes to the policy, which if implemented can result in a covert channel and theft.

### Listing 4: Modified Assistant Manager (Permanent and Contract) Role Policy

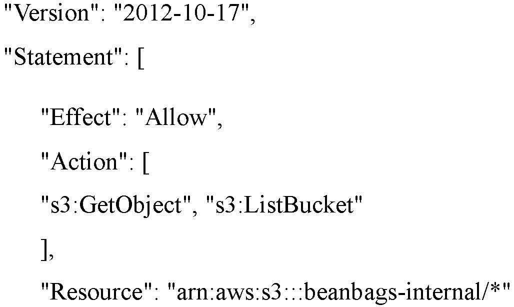

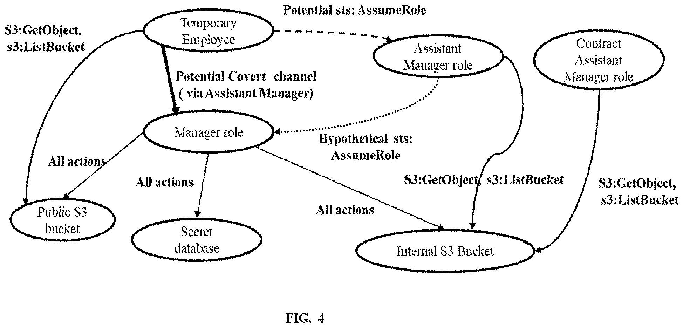

The graph generated by the system predicting covert channels is depicted in FIG. 4. Any policy changes that allows privilege escalation shown by the dotted edge labeled 'Hypotheticalsts:AssumeRole' can result in a covert channel and theft. Thus, system 100 is not only able to detect covert channels in existing misconfigured policies but can also anticipate and warn about potential covert channels that can arise due to specific policy changes.

Thus, the method and system disclosed herein enables to overcome subjectivity due to manual involvement, for interpretation and right conversion of intent of the access specification into the access control policies set for the cloud environment . This enables automatically detecting implicit access violation paths that may be inadvertently introduced and go undetected. The LLM, based on the given inputs (as prompts) is able to understand the concept that chaining of role assumption can lead to violation of access specification. Presence of direct channel for undesired access of a restricted resource, which introducing access violation or theft can be is explicitly indicated to the policy administrator, end user alerting to correct the policy while providing recommendations for changes. Such recommendations will be critical in scenarios where users or clients are provided flexibility to self-configure the access control policies. The covert channel detection and indication enables taking preventive measures against misconfigured access control policy and avoids backfires leading to breach. The feature of the system for thee automated analysis of configured access control policies in accordance with the access specification in natural language defined by the user or organization provides time efficient and accurate analysis to help strengthen the policy formulation.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the
following claims.

## Claims

1. A processor implemented method (200) for access control violation detection in cloud environment, the method comprising:
receiving (202), via one or more hardware processors, a set of access control policies, formulated in accordance with an access specification specified in natural language for a cloud environment, wherein the set of access control policies specify i) one or more resources among a plurality of resources that are individually accessible to a principal among a plurality of principals, and ii) each role among a plurality of roles the principal is allowed assume role in the could environment;
determining (204), via a Large Language Model (LLM) executed by the one or more hardware processors, presence of at least one violation of the access specification by the set of access control policies, wherein the LLM is prompted via a first prompt comprising a set of directives instructing to process the set of access control policies, and the access specification for determining the at least one violation;
generating (206), via the LLM executed by the one or more hardware processors, a script for creating an access violation graph on determining presence of at least one access violation, wherein the LLM is prompted using a second prompt; and
generating (208), by the one or more hardware processors, the access violation graph by executing the script, the access violation graph comprising nodes representing one or more principals, one or more roles and one or more resources connected with edges describing access rights and allowed role assumption, wherein presence of implicit access to a restricted resource through assumption of one or more role by the principal is depicted by generating a highlighted edge as a covert channel between the principal and the restricted resource.

2. The method as claimed in claim 1, comprising anticipating via the LLM presence of covert channel for future assumption of role by the principal even if the covert channel is not present in received access control policies.

3. The method as claimed in claim 1, wherein the violation graph is generated via a graph description language and converted into user readable visual format.

4. The method as claimed in claim 1, wherein the prompt format comprises:
role field defining role of LLM in current conversation,
template mentioning the role in a single line,
prompt initialization field mentioning a task in a single line,
inputs filed mentioning the inputs to be received by the LLM.
directives field providing instructions to the LLM to perform the task.
output field mentioning an expected output format and path where the output needs to be generated, and
printing_instructions field: restrain form printing additional things and avoid hallucination.

5. A system (100) for access control violation detection in cloud environment, the system (100) comprising:
a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:
receive a set of access control policies, formulated in accordance with an access specification specified in natural language for a cloud environment, wherein the set of access control policies specify i) one or more resources among a plurality of resources that are individually accessible to a principal among a plurality of principals, and ii) each role among a plurality of roles the principal is allowed to assume role in the could environment;
determine via a Large Language Model (LLM) executed by the one or more hardware processors, presence of at least one violation of the access specification by the set of access control policies, wherein the LLM is prompted via a first prompt comprising a set of directives instructing to process the set of access control policies, and the access specification for determining the at least one violation;
generate via the LLM executed by the one or more hardware processors, a script for creating an access violation graph on determining presence of at least one access violation, wherein the LLM is prompted using a second prompt; and
generate by executing the script the access violation graph, comprising nodes representing one or more principals, one or more roles and one or more resources connected with edges describing access rights and allowed role assumption, wherein presence of implicit access to a restricted resource through assumption of one or more role by the principal is depicted by generating a highlighted edge as a covert channel between the principal and the restricted resource.

6. The system as claimed in claim 5, wherein the one or more hardware processors are configured to anticipate via the LLM presence of covert channel for future assumption of role by the principal even if the covert channel is not present in received access control policies.

7. The system as claimed in claim 5, wherein the violation graph is generated via a graph description language and converted into user readable visual format.

8. The system as claimed in claim 5, wherein the prompt format comprises:
role field defining role of LLM in current conversation,
template mentioning the role in a single line,
prompt initialization field mentioning a task in a single line,
inputs filed mentioning the inputs to be received by the LLM.
directives field providing instructions to the LLM to perform the task.
output field mentioning an expected output format and path where the output needs to be generated, and
printing_Instructions field: restrain form printing additional things and avoid hallucination.

9. One or more non-transitory machine-readable information storage mediums comprising one or more instructions which when executed by one or more hardware processors cause:
receiving a set of access control policies, formulated in accordance with an access specification specified in natural language for a cloud environment, wherein the set of access control policies specify i) one or more resources among a plurality of resources that are individually accessible to a principal among a plurality of principals, and ii) each role among a plurality of roles the principal is allowed assume role in the could environment;
determining via a Large Language Model (LLM) executed by the one or more hardware processors, presence of at least one violation of the access specification by the set of access control policies, wherein the LLM is prompted via a first prompt comprising a set of directives instructing to process the set of access control policies, and the access specification for determining the at least one violation;
generating via the LLM executed by the one or more hardware processors, a script for creating an access violation graph on determining presence of at least one access violation, wherein the LLM is prompted using a second prompt; and
generating the access violation graph by executing the script, the access violation graph comprising nodes representing one or more principals, one or more roles and one or more resources connected with edges describing access rights and allowed role assumption, wherein presence of implicit access to a restricted resource through assumption of one or more role by the principal is depicted by generating a highlighted edge as a covert channel between the principal and the restricted resource.

10. The one or more non-transitory machine-readable information storage mediums as claimed in claim 9, comprising anticipating via the LLM presence of covert channel for future assumption of role by the principal even if the covert channel is not present in received access control policies.

11. The one or more non-transitory machine-readable information storage mediums as claimed in claim 9,, wherein the violation graph is generated via a graph description language and converted into user readable visual format.

12. The one or more non-transitory machine-readable information storage mediums as claimed in claim 9,, wherein the prompt format comprises:
role field defining role of LLM in current conversation,
template mentioning the role in a single line,
prompt initialization field mentioning a task in a single line,
inputs filed mentioning the inputs to be received by the LLM.
directives field providing instructions to the LLM to perform the task.
output field mentioning an expected output format and path where the output needs to be generated, and
printing_instructions field: restrain form printing additional things and avoid hallucination.
